# EUROPÄISCHE PATENTSCHRIFT

(11) **EP 1 674 751 B1**
(45) Veröffentlichungstag und Bekanntmachung des Hinweises auf die Patenterteilung: **05.09.2007**
(21) Anmeldenummer: 05024493.8
(22) Anmeldetag: 10.11.2005
(51) Int. Cl.: F16D 23/12

(54) **Ausrückvorrichtung**
Release device
Dispositif de debrayage

(30) Priorität: 22.12.2004 DE 102004061679
(43) Veröffentlichungstag der Anmeldung: 28.06.2006
(73) Patentinhaber: Schaeffler KG, 91074 Herzogenaurach (DE)
(72) Erfinder: Maier, Markus, 90556 Cadolzsburg (DE); Klöpfer, Bernhard, 91438 Bad Windsheim (DE); Winkelmann, Ludwig, 91056 Erlangen (DE)

(56) Entgegenhaltungen:
- US-A- 3 277 988
- US-A- 5 979 632
- PATENT ABSTRACTS OF JAPAN Bd. 1997, Nr. 05, 30. Mai 1997 (1997-05-30) & JP 09 014291 A (NISSAN DIESEL MOTOR CO LTD), 14. Januar 1997 (1997-01-14)

## Beschreibung

### Gebiet der Erfindung

Die Erfindung betrifft eine Ausrückvorrichtung für eine in Fahrzeugen mit mechanischem Handschaltgetriebe eingesetzte Schalttrennkupplung. Die Ausrückvorrichtung umfasst ein eine Antriebswelle beabstandet umschließendes, hohlzylindrisch gestaltetes Gehäuse, das bei einer Betätigung der Ausrückvorrichtung axial verschiebbar ist. Auf dem zur Schalttrennkupplung gerichteten Seite ist das Gehäuse mit einem Ausrücklager verbunden. Gegenüberliegend zu dem Ausrücklager steht das Gehäuse mit einem Betätigungshebel in einer Wirkverbindung, wobei das Gehäuse formschlüssig, spielbehaftet mit dem Betätigungshebel verbunden ist, wobei
- der Betätigungshebel (2) eine Aufnahme (11) bildet, in der das Gehäuse (3) in zumindest zwei voneinander abweichenden Einbaupositionen fixiert werden kann, wodurch sich eine unterschiedliche Bauhöhe, ein Höhenausgleich "s" der Ausrückvorrichtung (1) einstellt;
- das Gehäuse (3) für jede Einbauposition jeweils zwei um 90° versetzte, paarweise angeordnete Anlageflächen (8a, 8b; 18a, 18b) aufweist, über die das Gehäuse (3) an dem Betätigungshebel (2) abgestützt ist,
und wobei das Gehäuse eine Mantelfläche aufweist.

### Hintergrund der Erfindung

Das Gehäuse der Ausrückvorrichtung übernimmt die Funktion eines Trägerteils bzw. eines Übertragungsgliedes, das bei einer Betätigung der Ausrückvorrichtung in Verbindung mit dem Betätigungshebel und dem Ausrücklager über die Schalttrennkupplung einen Kraftfluss zwischen der Brennkraftmaschine und dem Schaltgetriebe trennt und damit einen Gangwechsel des Schaltgetriebes ermöglicht. Zur Montagevereinfachung der Ausrückvorrichtung sind Konzepte bekannt, bei denen das Ausrücklager unverlierbar mit dem Gehäuse vorkomplettiert werden kann.

Aus der DE 76 00 543 U1 ist eine solche Vorrichtung bekannt. Diese Ausrückvorrichtung umfasst ein Ausrücklager, dessen Innenring mit einem radial nach außen verlängerten Flansch versehen ist, wodurch der Innenring des Ausrücklagers drehsicher in einen als Ausrückgabel gestalteten Betätigungshebel eingreift. Für die Verbindung der Ausrückgabel mit dem verlängert ausgebildeten Flanschabschnitt des Innenrings werden separate, zusätzliche Halteelemente eingesetzt. Diese bekannte Maßnahme verkürzt die Montagezeiten und ermöglicht eine weitestgehend automatisierte Montage.

Die Ausrückvorrichtung gemäß der DE 28 30 249 A1 umfasst ein Ausrücklager, welches zur verliergesicherten Anordnung an dem Gehäuse ein Halteblech sowie eine Federscheibe in Verbindung außenseitiger Befestigungsmittel einschließt. Dazu weist die Federscheibe eine Lasche auf, in deren Aussparung ein Haken der Unterlegscheibe verrastet. Nachteilig umschließt das Halteelement unmittelbar den Ringflansch des Gehäuses, so dass bei unterschiedlichen Temperatur-Ausdehnungskoeffizienten zwischen den unmittelbar zusammenwirkenden Bauteilen die Gefahr einer Verspannung entsteht.

Die FR 2 304 826 A1 zeigt als Ausrückvorrichtung ebenfalls ein axial verschiebbares Gehäuse, das mit einem Ausrücklager in Verbindung steht. Zur verliergesicherten Anordnung des Ausrücklagers ist der Ringflansch des Gehäuses von einer Hülse umschlossen, die sich einseitig axial über das Ausrücklager erstreckt und mittels eines radial nach innen gerichteten Bordes das Ausrücklager positioniert.

US 5,979,632 zeigt eine vorkomplettierbare Ausrückvorrichtung, die ohne Zusatzteile unterschiedliche Bauhöhen zum Einsatz in verschiedenen Schaltgetrieben ermöglicht.

Der Betätigungshebel bildet eine Aufnahme, in der das Gehäuse in zumindest zwei voneinander abweichenden Einbaupositionen drehfest fixiert ist. Die voneinander abweichenden Einbaupositionen ermöglichen unterschiedliche Bauhöhen, d.h. einen Höhenausgleich der Ausrückvorrichtung. Das Gehäuse weist dazu für jede Einbauposition jeweils zwei um 90° versetzte, paarweise angeordnete Anlageflächen auf, über die sich das Gehäuse an dem Betätigungshebel abstützen kann. Die Ausrückvorrichtung ist bei einer Beibehaltung der Bauteile, Gehäuse und Betätigungshebel für unterschiedliche Fahrzeuge einsetzbar. Vorteilhaft ermöglicht der Höhenausgleich der Ausrückvorrichtung den Einbau einer baugleichen Vorrichtung in Fahrzeuge deren Getriebe- und oder / oder Motorkonfiguration sich unterscheidet.

Der Höhenausgleich kann beispielsweise so erfolgen, dass die Länge der unterschiedlichen Anlageflächen an die Einbausituation von zumindest zwei Schaltgetriebe-Varianten angepasst ist, mit denen ein Motor des Fahrzeugs kombinierbar ist. Im Vergleich zu bisherigen Lösungen stellt sich ein wirtschaftlicher Vorteil ein, da die Betätigungshebel und Gehäuse für verschiedene Baugrößen von Schaltgetrieben oder Motoren Verwendung finden. Für Fahrzeughersteller stellt sich durch die Erfindung eine gewünschte Bauteilverringerung ein, da vom Aufbau identische Ausrückvorrichtungen für unterschiedliche Antriebskonzepte, d. h. verschiedene Zuordnungen von Schaltgetrieben mit Brennkraftmaschinen einsetzbar sind. Die Verringerung von Unterschiedsteilen reduziert den logistischen Aufwand, vereinfacht die Lagerhaltung und bewirkt einen Kostenvorteil.

### Aufgabe der Erfindung

Die Aufgabe der Erfindung ist es, eine Ausrückvorrichtung der gattungsbildenden Art zu schaffen, die insbesondere in der automatisierten Montage prozesssicher montierbar ist.

### Zusammenfassung der Erfindung

Diese Aufgabe ist dadurch gelöst, dass das Gehäuse mit zwei unterschiedlichen Schlüsselweiten im Bereich der Mantelfläche versehen ist. Dieser Aufbau vereinfacht eine lageorientierte Zuordnung bei einer Montage des Gehäuses in den Betätigungshebel, indem jede Schlüsselweite einer definierten Einbaulage, d. h. Ausrichtung des Gehäuses gegenüber dem Betätigungshebel entspricht. Die unterschiedlichen Schlüsselweiten gewährleisten insbesondere eine automatisierte, prozesssichere Montage der Ausrückvorrichtung.

Eine bevorzugte Ausgestaltung der Erfindung schließt ein Gehäuse mit ballig gestalteten Ansätzen an der Anlageflächen ein. Die auch als Ballus zu bezeichnenden Ansätze bilden mit zugehörigen Gegenflächen des Betätigungshebels eine Kontaktzone. Alternativ dazu schließt die Erfindung ebenfalls stirnseitig gerade ausgebildete Ansätze des Gehäuses an den Anlageflächen ein, die mit dem Betätigungshebel zusammenwirken.

Bevorzugt ist das Gehäuse aus Kunststoff hergestellt, wozu sich insbesondere ein glasfaserverstärkter Kunststoff eignet. Der Aufbau des Gehäuses schließt dabei einstückig angeformte Anlageflächen ein, so dass in einem Herstellprozess, einem Spritzverfahren, das Gehäuse kostengünstig herstellbar ist.

Zur Erzielung einer hochfesten, verschleißoptimierten Gestaltung der Anlageflächen bietet es sich weiterhin an, das Gehäuse mit einer Armierung zu versehen. Dazu eignet sich beispielsweise eine hülsenartig geformte, die Mantelfläche des Gehäuses umschließende Armierung, die gleichzeitig die axial vorstehenden Ansätze einschließende Anlageflächen umfasst. Eine verliergesicherte Anordnung der Armierung kann dabei beispielsweise mittels einer Schnappverbindung hergestellt werden, bei der ein vorstehender Noppen des Gehäuses in der Einbaulage in eine korrespondierende Ausnehmung der Armierung verschnappt.

Die Erfindung schließt bei Bedarf außerdem ein, die Ansätze der Anlageflächen des Gehäuses und / oder die Gegenflächen des Betätigungshebels im Bereich der Kontaktzone zu beschichten. Dazu bietet es sich an, eine verschleißmindernde und / oder eine reibungsmindernde Beschichtung vorzusehen, um den Verschleiß im Bereich der Kontaktfläche zwischen dem Gehäuse und dem Betätigungshebel zu verringern. Diese gleichzeitig eine Geräuschentwicklung vermeidende Maßnahme erhöht vorteilhaft die Lebensdauer der Ausrückvorrichtung.

Weiterhin schließt die Erfindung bei Bedarf ein, dass eine Armierung als Mehrstoffschicht direkt zusammen mit der Herstellung des Gehäuses in einem Mehrstoffspritzverfahren so gefertigt wird, damit eine form- und / oder stoffschlüssige Verbindung beider Bauteile gewährleistet ist.

Zur Erzielung einer für die Funktion der Ausrückvorrichtung erforderlichen verdrehgesicherten Anordnung des Gehäuses gegenüber dem Betätigungshebel weist das Gehäuse an der Mantelfläche Abflachungen auf. Die parallel zueinander angeordneten Abflachungen greifen in der Einbaulage formschlüssig und spielbehaftet in eine mit der Mantelfläche des Gehäuses korrespondierenden Aufnahme des Betätigungshebels ein. Diese Anordnung ermöglicht eine ungehinderte winkelbegrenzte Stellbewegung des Betätigungshebels gegenüber dem Gehäuse bei einer Betätigung der Ausrückvorrichtung.

Als eine ergänzende Maßnahme eine Fehlmontage zwischen dem Gehäuse und dem Betätigungshebel zu verhindern ist vorteilhaft eine optische Anzeige vorgesehen. Vorteilhaft ist dazu jeder Einbausituation eine farbliche Kennzeichnung zwischen dem Gehäuse und dem Betätigungshebel vorgesehen. Dadurch ist nach erfolgter Montage mittels Sichtkontrolle der Einbau kontrollierbar. Andererseits vereinfacht beispielsweise eine unterschiedliche farbige Kennzeichnung der jeweiligen Anlageflächen eine Montage mittels Roboter, indem dieser mittels entsprechender Programmierung das Gehäuse entsprechend der Farbkennung ausgerichtet in die Aufnahme des Betätigungshebel einfügt.

Alternativ zu einer farbigen Kennzeichnung ist gemäß der Erfindung als optische Anzeige im Bereich der Anlageflächen ein aufgetragener Barcode vorgesehen. Die mit unterschiedlichen Barcodes versehenen Anlageflächen ermöglichen bei einer automatisierten Montage, dass der Roboter das Gehäuse gegenüber dem Betätigungshebel lageorientiert zuordnet.

Die Ausrückvorrichtung kann weiterhin mit einer optischen Anzeige zwischen dem Gehäuse und dem Betätigungshebel versehen sein, die ausschließlich nach erfolgter Komplettierung der Ausrückvorrichtung sichtbar ist. Diese Maßnahme bietet sich beispielsweise für eine Montagevorrichtung an, in der die gewünschte Bauhöhe vorgegeben ist und in der erst nach erfolgter Montage ein farbig gekennzeichneter Bereich des Gehäuses in einer Ausnehmung des Betätigungshebels sichtbar wird.

Als eine weitere optische Anzeige schließt die Erfindung bei Bedarf vertiefte oder hervortretende Zeichen ein, die vorzugsweise im Bereich der Mantelfläche des Gehäuses angeordnet sind und die nach erfolgter Montage unsichtbar oder lesbar sind. Dazu eignet sich beispielsweise eine rippenartige Struktur, eine Schrift, Ziffer oder Buchstaben bzw. eine farbige Kennzeichnung.

Bevorzugt weist eine an dem Gehäuse angeformte, eine optische Anzeige bildende Rippe eine Sollbruchstelle auf, die bei einer Lageübereinstimmung zwischen dem Gehäuse und dem Betätigungshebel eine nur geringfügige erhöhte Fügekraft erfordert, um das Gehäuse in die korrespondierende Aufnahme des Betätigungshebels einzusetzen.

Zur Erzielung einer unverlierbaren Befestigung des Gehäuses an dem Betätigungshebel kann eine Schnappverbindung vorgesehen werden. Dazu eignet sich bevorzugt eine als Fixiernocken gestaltete Durchstellung bzw. Ausklinkung, die im Einbauzustand formschlüssig in eine korrespondierende Aussparung bzw. Ausnehmung des Betätigungshebels eingreift.

Vorteilhaft umfasst die Ausrückvorrichtung ein aus Kunststoff hergestelltes Gehäuse sowie einen Betätigungshebel aus Stahlblech. Kostengünstig ist dazu der Betätigungshebel spanlos durch ein Tiefziehverfahren herstellbar. Weiterhin schließt die Erfindung einen Betätigungshebel ein, der aus einem hochfesten Kunststoff, beispielsweise glasfaserverstärktem Kunststoff oder Kevlar hergestellt ist.

Die Erfindung sieht bei Bedarf vor, dass alle Bauteile der Ausrückvorrichtung, das Gehäuse, der Betätigungshebel sowie das Ausrücklager unabhängig von der Zuordnung dieser Bauteile zur Erzielung unterschiedlicher Bauhöhen zu einer Baueinheit unverlierbar zusammengefügt sind.

### Kurze Beschreibung der Zeichnungen

Ausführungsbeispiele der Erfindung sind in den Zeichnungen dargestellt, die nachfolgend näher beschrieben werden. Es zeigen:
- Figur 1: in einer Seitenansicht eine erfindungsgemäße Ausrückvorrichtung;
- Figur 2: die Ausrückvorrichtung gemäß Figur 1 in der Vorderansicht;
- Figur 3: die Ausrückvorrichtung in einer Schnittdarstellung gemäß der Linie 3 - 3 aus Figur 2;
- Figur 4: in einem vergrößerten Maßstab die Einzelheit "Z" gemäß Figur 3;
- Figur 5: in einer Perspektive ein Gehäuse der erfindungsgemäßen Ausrückvorrichtung in Verbindung mit einem Ausrücklager;
- Figur 6: ein zu Figur 5 alternativ gestaltetes Gehäuse in Verbindung mit einem Ausrücklager;
- Figur 7: die Ausrückvorrichtung gemäß Figur 1, die den Höhenausgleich verdeutlicht.

### Detaillierte Beschreibung der Zeichnungen

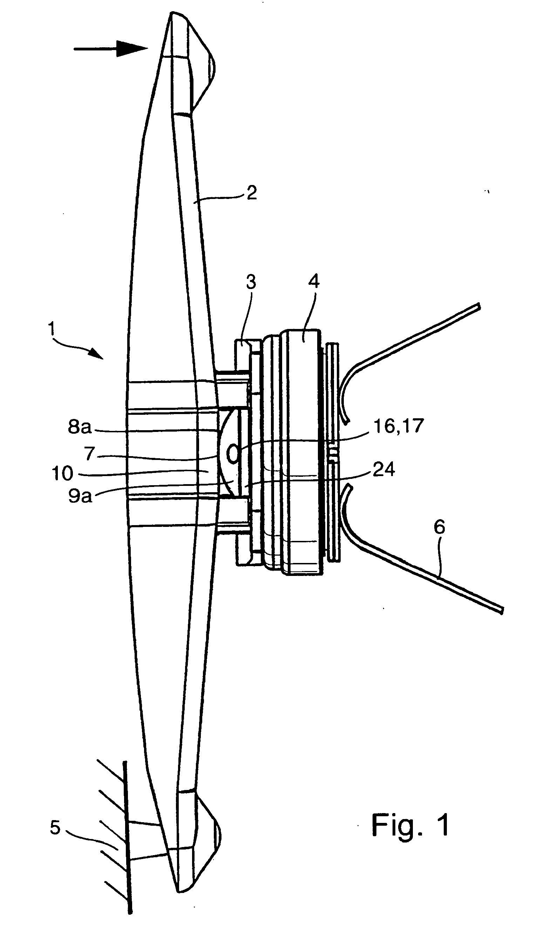

In Figur 1 ist eine Ausrückvorrichtung 1 dargestellt, die einen Betätigungshebel 2, ein Gehäuse 3 sowie ein Ausrücklager 4 umfasst. Im Einbauzustand ist der Betätigungshebel 2 mit einem Ende an einem ortsfesten Lagerpunkt 5 abgestützt. Zur Betätigung einer Schalttrennkupplung 6, von der eine Tellerfeder dargestellt ist, wird auf das weitere Ende des Betätigungshebels 2 eine in Pfeilrichtung wirkende Kraft ausgeübt, wodurch das Ausrücklager 4 sich axial ebenfalls in Pfeilrichtung verschiebt und dabei einen Kraftfluss über die Schalttrennkupplung 6 unterbricht, um beispielsweise einen Gangwechsel des Schaltgetriebes zu ermöglichen. Zur Erzielung einer möglichst momentenfreien, reibungsarmen und verschleißmindernden Kraftübertragung von dem schwenkbaren Betätigungshebel 2 auf das axial verschiebbare Gehäuse 3 ist zwischen diesen Bauteilen eine weitestgehend linienberührte Kontaktzone 7 vorgesehen. Dazu bildet das Gehäuse 3 zwei erhaben ausgeführte Anlageflächen 8a, 8b, ausgebildet als axial vorstehende Ansätze 9a, 9b, die stirnseitig konvex bzw. ballig gestaltet sind und mit einer weitestgehend geraden bzw. ebenen Gegenfläche 10 kraftschlüssig an dem Betätigungshebel 2 anliegen.

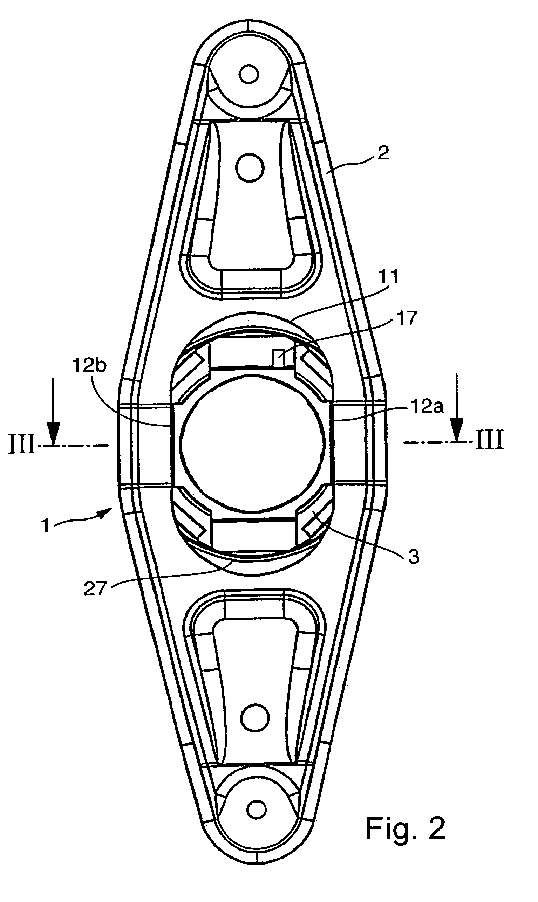

Wie die Figur 2 verdeutlicht, ist das Gehäuse 3 formschlüssig in eine Aufnahme 11 des Betätigungshebels 2 eingesetzt. Dazu weist das Gehäuse 3 zwei parallele Abflachungen 12a, 12b, die in eine weitestgehend korrespondierend gestaltete Aufnahme 11 des Betätigungshebels 2 eingesetzt ist. Damit ist das Gehäuses 3 formschlüssig, verdrehgesichert in dem Betätigungshebel 2 fixiert, wobei gleichzeitig funktionsbedingt eine begrenzte Verschiebung des Gehäuses 3 in Längsrichtung des Betätigungshebels 2 möglich ist.

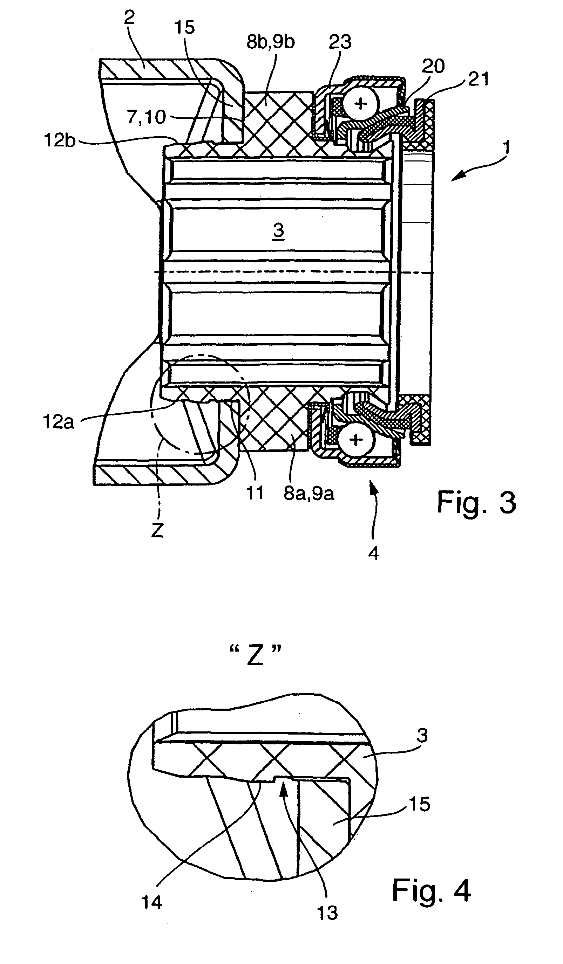

Die zu einer Baueinheit zusammengefügten Bauteile der Ausrückvorrichtung 1 sind unverlierbar miteinander verbunden. Dabei ist das Gehäuse 3 mittels einer in den Figuren 3 und 4 abgebildeten Schnappverbindung 13 verliergesichert zusammengefügt. Die Schnappverbindung 13 umfasst zumindest einen Fixiernocken 14, der wie in Figur 4 abgebildet, in der Einbaulage eine Wandung 15 des Betätigungshebels 2 hintergreift.

Mittels einer in Figur 1 abgebildeten optischen Anzeige 16 erfolgt eine Überprüfung der Einbaulage des Gehäuses 3 gegenüber dem Betätigungshebel 2. Eine korrekte Einbaulage ist erreicht, sobald eine auf dem Ansatz 9a aufgebrachte Kennzeichnung 17 sichtbar ist und nicht von einem Steg 24 des Betätigungshebels 2 verdeckt ist.

Die Figur 3 verdeutlicht den Aufbau des Gehäuses 3, das gleichzeitig als Trägerteil für das Ausrücklager 4 dient. Ein äußerer Lagerring 23 des Ausrücklagers 4 ist dabei drehstarr an dem Gehäuse 3 befestigt. An einem weiteren inneren Lagerring 20 des Ausrücklagers 4 stützt sich ein Einstellring 21 ab, der stirnseitig mit einer Tellerfeder der Schalttrennkupplung 6 in Verbindung steht.

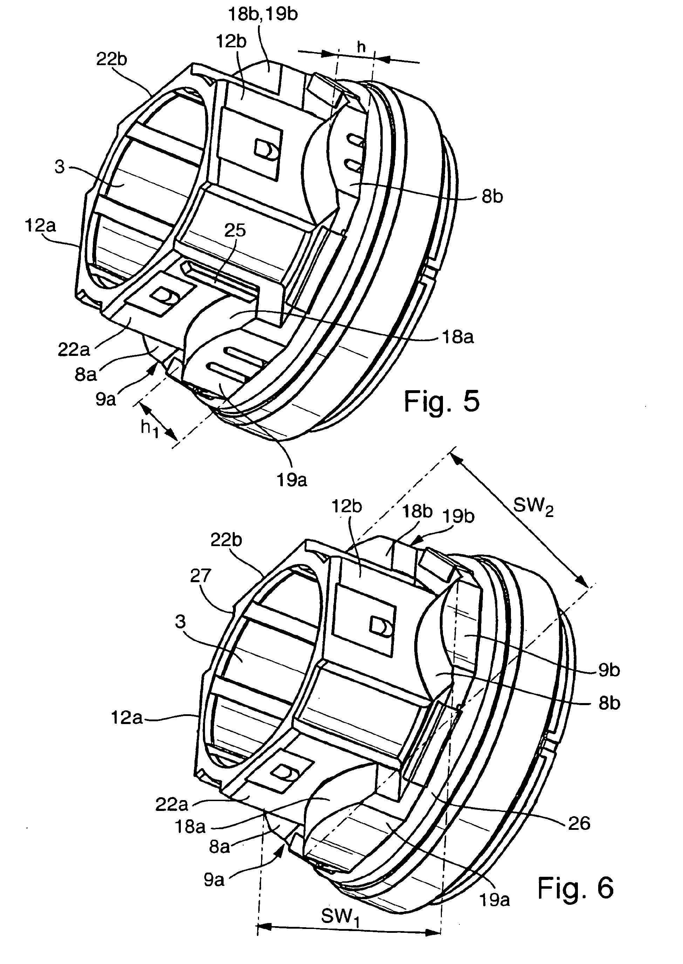

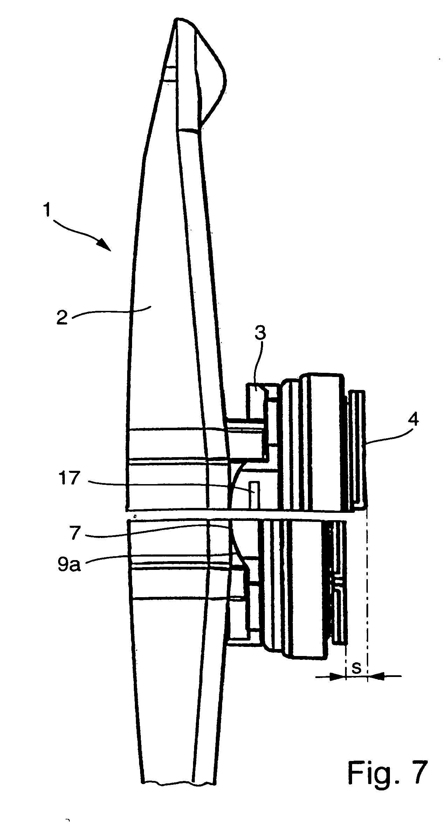

Die Figuren 5 und 6 zeigen das Gehäuse 3 in Verbindung mit dem Ausrücklager 4 in einer Perspektive. Diese Darstellungen verdeutlichen insbesondere die erfindungsgemäße konstruktiv unterschiedlich gestaltete mit "h" bzw. "h₁" gekennzeichnete Kontaktzone 7 an dem Gehäuse 3 gegenüber dem Betätigungshebel 2, zur Erzielung eines Höhenausgleichs "S" gemäß Figur 7. Dazu umfasst das Gehäuse 3 jeweils vier Anlageflächen 8a, 8b; 18a, 18b. Der Vorteil einen Hebel für zwei verschiedene Anwendungen einzusetzen, wird durch zwei Schlüsselweiten SW₁ und SW₂ sichergestellt. Die axial vorstehenden Ansätze 19a, 19b der Anlageflächen 18a, 18b übertreffen dabei die Länge der weiteren axialen Ansätze 9a, 9b der Anlageflächen 8a, 8b. Durch eine Verdrehung des Gehäuses 3 jeweils um 90° gegenüber dem Betätigungshebel 2 stellen sich unterschiedliche Bauhöhen der Ausrückvorrichtung 1 ein, wodurch ein Höhenausgleich "S" gemäß Figur 7 erzielbar ist. Die Ausrückvorrichtung 1 ist mit einem gleichem Bauteileumfang für unterschiedliche Schaltgetriebe und/oder Brennkraftmaschinen einsetzbar.

Die direkt an dem aus Kunststoff hergestellten Gehäuse 3 angeformten Anlageflächen 8a, 8b; 18a, 18b in Verbindung mit den zugehörigen axialen Ansätzen 9a, 9b; 19a, 19b gewährleisten eine unterschiedliche Bauhöhe bzw. ermöglichen einen Höhenausgleich "S". Das Gehäuse 3 gemäß Figur 5 weist im Bereich der Abflachung 22a eine Abstimmrippe 25 auf, die insbesondere dazu dient eine Fehlmontage des Gehäuses 3 zu unterbinden. Diese Abstimmrippe 25 verhindert einerseits bei einer Handmontage eine falsche Zuordnung des Gehäuses 3 in den Betätigungshebel 2. Andererseits weist die Abstimmrippe 25 eine Sollbruchstelle auf, die nach Aufbringen einer erhöhten Einpresskraft abschert und damit einen ungehinderten Einbau des Gehäuses 3 in beiden Positionen ermöglicht.

Im Unterschied zu Figur 5 weist das Gehäuse 3 gemäß Figur 6 eine weitestgehend ringförmig gestaltete Armierung 26 auf, die als separates Bauteil alle Anlageflächen 8a, 8b; 18a, 18b einschließt. Die Armierung 26 ist innenseitig der Kontur der Mantelfläche 27 des Gehäuses 3 angepasst und damit formschlüssig, verdrehgesichert mit dem Gehäuse 3 verbunden. Die gegenüber dem Kunststoff des Gehäuses 3 eine höhere Festigkeit aufweisende Armierung 26 verringert bzw. vermeidet einen Verschleiß im Bereich der Kontaktzone 7 zwischen dem Gehäuse 3 und dem Betätigungshebel 2. Vorteilhaft weist die Armierung 26 unterschiedliche Schlüsselweiten im Bereich der Anlageflächen 8a, 8b; 18a, 18b auf die eine automatisierte Montage vereinfacht. Damit kann das Gehäuse 3 stets von einem Werkzeug gleicher Schlüsselweite aufgenommen werden und mit dem Betätigungshebel 2 zusammengefügt werden, wodurch eine Fehlmontage unterbleibt. Dazu bietet es sich an, die sich zwischen den Anlageflächen 8a, 8b einstellende Schlüsselweite "sw₁" größer auszubilden als die weitere Schlüsselweise "sw₂", die sich zwischen den Anlageflächen 18a, 18b einstellt.

Die Figur 7 zeigt den möglichen Höhenausgleich "S" der sich durch die unterschiedliche Zuordnung des Gehäuses 3 gegenüber dem Betätigungshebel 2 einstellt. Dieser Höhenausgleich "S" ist realisierbar, indem das Gehäuse 3 um 90° gegenüber dem Betätigungshebel 2 verdreht eingesetzt wird.

### Bezugszahlen

- 1: Ausrückvorrichtung
- 2: Betätigungshebel
- 3: Gehäuse
- 4: Ausrücklager
- 5: Lagerpunkt
- 6: Schalttrennkupplung
- 7: Kontaktzone
- 8a: Anlagefläche
- 8b: Anlagefläche
- 9a: Ansatz
- 9b: Ansatz
- 10: Gegenfläche
- 11: Aufnahme
- 12a: Abflachung
- 12b: Abflachung
- 13: Schnappverbindung
- 14: Fixiernocken
- 15: Wandung
- 16: optische Anzeige
- 17: Kennzeichnung
- 18a: Anlagefläche
- 18b: Anlagefläche
- 19a: Ansatz
- 19b: Ansatz
- 20: Lagerring (innen)
- 21: Einstellring
- 22a: Abflachung
- 22b: Abflachung
- 23: Lagerring (außen)
- 24: Steg
- 25: Abstimmrippe
- 26: Armierung
- 27: Mantelfläche

## Patentansprüche

1. Ausrückvorrichtung für eine in Fahrzeugen eingesetzte Schalttrennkupplung (6), umfassend ein eine Antriebswelle beabstandet umschließendes, hohlzylindrisch gestaltetes und axial verschiebbares Gehäuse (3), das über eine Anlagefläche (8a, 8b; 18a, 18b) an einem Betätigungshebel (2) abgestützt ist und weiterhin formschlüssig, spielbehaftet an dem Betätigungshebel (2) befestigt ist und das Gehäuse (3) an dem vom Betätigungshebel (2) abgewandten Ende ein Ausrücklager (4) aufweist, wobei
- der Betätigungshebel (2) eine Aufnahme (11) bildet, in der das Gehäuse (3) in zumindest zwei voneinander abweichenden Einbaupositionen fixiert werden kann, wodurch sich eine unterschiedliche Bauhöhe, ein Höhenausgleich "s" der Ausrückvorrichtung (1) einstellt;
- das Gehäuse (3) für jede Einbauposition jeweils zwei um 90° versetzte, paarweise angeordnete Anlageflächen (8a, 8b; 18a, 18b) aufweist, über die das Gehäuse (3) an dem Betätigungshebel (2) abgestützt ist,
- das Gehäuse (3) eine Mantelfläche (27) aufweist,
- **dadurch gekennzeichnet, dass** das Gehäuse (3) zwei unterschiedliche Schlüsselweiten "sw₁", "sw₂" im Bereich der Mantelfläche (27), insbesondere der Anlageflächen (8a, 8b; 18a, 18b), vorsieht, die zur Werkzeugaufnahme bestimmt sind.

2. Ausrückvorrichtung nach Anspruch 1, wobei das Gehäuse (3) jeder Einbauposition entsprechende Anlageflächen (8a, 8b; 18a, 18b) einschließt, die als axial vorstehende, mit dem Betätigungshebel (2) zusammenwirkende Ansätze (9a, 9b; 19a, 19b) ausgebildet sind.

3. Ausrückvorrichtung nach Anspruch 1, bei der das Gehäuse (3) konvex bzw. ballig gestaltete Ansätze (9a, 9b; 19a, 19b) der Anlageflächen (8a, 8b; 18a, 18b) aufweist, die mit einer Gegenfläche (10) des Betätigungshebels (2) Kontaktzonen (7) bilden.

4. Ausrückvorrichtung nach Anspruch 2, bei dem die Ansätze (9a, 9b; 19a, 19b) der Anlageflächen (8a, 8b; 18a, 18b) eben bzw. gerade ausgebildet sind.

5. Ausrückvorrichtung nach Anspruch 1, die ein aus Kunststoff hergestelltes Gehäuse (3) mit einstückig angeformten Anlageflächen (8a, 8b; 18a, 18b) umfasst.

6. Ausrückvorrichtung nach Anspruch 1, bei dem alle Anlageflächen (8a, 8b; 18a, 18b) als eine Armierung (26) ausgebildet sind, die als separates Bauteil dem Gehäuse (3) zugeordnet sind.

7. Ausrückvorrichtung nach einen der Ansprüche 2 bis 4, bei der die Ansätze (9a, 9b; 19a, 19b) zumindest stirnseitig oder an der Anlagefläche (8a, 8b; 18a, 18b) eine verschleißmindernde und / oder reibungsmindernde Beschichtung aufweisen.

8. Ausrückvorrichtung nach Anspruch 1, wobei zwei zueinander parallele Abflachungen (12a, 12b) an der Mantelfläche (27) in der Einbaulage formschlüssig in eine mit einer Außenkontur der Mantelfläche (27) korrespondierende Aufnahme (11) des Betätigungshebels (2) eingreift.

9. Ausrückvorrichtung nach Anspruch 1, die zur Vermeidung einer Fehlmontage für jede Einbausituation des Gehäuses (3) eine optische Anzeige (16) einschließt.

10. Ausrückvorrichtung nach Anspruch 9, die als optische Anzeige (16) einen Barcode aufweist.

11. Ausrückvorrichtung nach Anspruch 10, versehen mit einer optischen Anzeige (16), die nach erfolgter Komplettierung, im Einbauzustand des Gehäuses (3) sichtbar ist.

12. Ausrückvorrichtung nach Anspruch 9, die als optische Anzeige (16) vertiefte oder hervortretende Zeichen, wie beispielsweise eine Rippe oder eine Schrift vorsieht.

13. Ausrückvorrichtung nach Anspruch 12, wobei eine angeformte, eine Sollbruchstelle einschließende Abstimmrippe (25) einen lageorientierten Einbau des Gehäuses (3) sicherstellt.

14. Ausrückvorrichtung nach Anspruch 1, die eine Schnappverbindung (13) zwischen dem Gehäuse (3) und dem Betätigungshebel (2) umfasst.

15. Ausrückvorrichtung nach Anspruch 14, deren Schnappverbindung (13) als Fixiernocken (14) gestaltete Durchstellungen bzw. Ausklinkungen einschließt, die formschlüssig in eine korrespondierende Aussparung eingreift oder an einer Wandung (15) des Betätigungshebels (2) verschnappt.

16. Ausrückvorrichtung nach Anspruch 1, die einen Betätigungshebel (2) aus Stahlblech umfasst, der spanlos durch ein Tiefziehverfahren hergestellt ist.

17. Ausrückvorrichtung nach Anspruch 1, bei der alle Bauteile der Ausrückvorrichtung (1), das Gehäuse (3), der Betätigungshebel (2) sowie das Ausrücklager (4) zu einer Baueinheit unverlierbar zusammengefügt sind.

18. Ausrückvorrichtung nach Anspruch 6, wobei mindestens eine der paarweise ausgeführten Anlageflächen als separates Bauteil dem Gehäuse (3) zugeordnet sind und mit diesem form- und / oder stoffschlüssig verbunden sind.

19. Ausrückvorrichtung nach Anspruch 6, wobei die Armierung (26) als Mehrstoffschicht direkt bei der Herstellung des Gehäuses im Mehrstoffspritzverfahren gefertigt wird und mit dem Grundgehäuse form- und / oder stoffschlüssig verbunden sind.

20. Ausrückvorrichtung nach einem der zuvor genannten Ansprüche, wobei die unterschiedlichen Kontaktstellen des Gehäuses oder der Armierung zur Kennzeichnung paarweise unterschiedliche Werkstoffeinfärbungen aufweisen, oder farblich unterschiedlich gekennzeichnet sind.

## Claims

1. Release device for a gearshift clutch (6) used in vehicles, said release device comprising a hollow cylindrical, axially displaceable housing (3) that surrounds a drive shaft in spaced relationship while being supported through a support surface (8a, 8b; 18a, 18b) on an actuating lever (2) and while being further fixed with clearance by interlocking means to the actuating lever (2), said housing (3) comprising on the end turned away from the actuating lever (2), a release bearing (4), wherein
- the actuating lever (2) forms a reception (11) in which the housing (3) can be fixed in at least two different positions of installation, so that a different design height, a height adjustment "s" of the release device (1) is obtained,
- for each position of installation, the housing (3) comprises support surfaces (8a, 8b; 18a, 18b) arranged in pairs offset at 90° to each other through which the housing (3) is supported on the actuating lever (2),
- the housing (3) comprises an outer peripheral surface (27),
- **characterised in that**, in the region of the outer peripheral surface (27), in particular, the support surfaces (8a, 8b; 18a, 18b), the housing (3) possesses two different wrench spans "sw₁", "sw₂" intended for receiving tools.

2. Release device according to claim 1, wherein the housing (3) comprises respective support surfaces (8a, 8; 18a, 18b) corresponding to each position of installation, which support surfaces are configured as axially projecting extensions (9a, 9b; 19a, 19b) that cooperate with the actuating lever (2).

3. Release device according to claim 1, wherein the supporting surfaces (8a, 8b; 18a, 18b) of the housing (3) have convex or crowned extensions (9a, 9b; 19a, 19b) that form contact zones (7) with a counter surface (10) of the actuating lever (2).

4. Release device according to claim 2, wherein the extensions (9a, 9b; 19a, 19b) of the support surfaces (8a, 8b; 18a, 18b) have a flat or straight configuration.

5. Release device according to claim 1 comprising a housing (3) made of a plastic material with support surfaces (8a, 8b; 18a, 18b) formed integrally thereon.

6. Release device according to claim 1, wherein all the support surfaces (8a, 8b; 18a, 18b) are configured as an armour (26) that is associated as a discrete part to the housing (3).

7. Release device according to one of claims 2 to 4, wherein a wear-reducing and/or friction-reducing coating is provided at least on front ends of the extensions (9a, 9b; 19a, 19b) or on the support surface (8a, 8b; 18a, 18b).

8. Release device according to claim 1, wherein two parallel, flattened portions (12a, 12b) on the outer peripheral surface (27) interlock in the installed state with a reception (11) of the actuating lever (2) corresponding to the outer contour of the outer peripheral surface (27).

9. Release device according to claim 1, which, for avoiding a mounting error, comprises a visual indication (16) for every position of installation of the housing (3).

10. Release device according to claim 9, wherein the visual indication (16) is a bar code.

11. Release device according to claim 10, comprising a visual indication (16) that, after assembly, is visible in the installed state of the housing (3).

12. Release device according to claim 9, comprising a visual indication (16) in the form of sunk or raised marks like, for example, a rib or letters.

13. Release device according to claim 12, wherein an integrally formed matching rib (25) containing a predetermined breaking point assures an installation of the housing (3) in the right position.

14. Release device according to claim 1, comprising a snap connection (13) between the housing (3) and the actuating lever (2).

15. Release device according to claim 14, wherein the snap connection (13) includes stampings or notches in the form of a fixing toe (14) that engages positively into a corresponding recess or snaps onto a wall (15) of the actuating lever (2).

16. Release device according to claim 1, comprising an actuating lever (2) made of sheet steel without chip removal by a deep-drawing method.

17. Release device according to claim 1, wherein all components of the release device (1), the housing (3), the actuating lever (2) as well as the release bearing (4), are assembled to form an inseparable structural unit.

18. Release device according to claim 6, wherein at least one pair of support surfaces is associated in the form of a discrete component to the housing (3) and connected to the housing by positive engagement and / or rendered unitary with the housing.

19. Release device according to claim 6, wherein the armour (26) is produced as a multi-component coating directly during the fabrication of the housing (3) by multi-component spraying and is connected to the basic housing by positive engagement and / or rendered unitary with the housing.

20. Release device according to one of the preceding claims, wherein the different contact points of the housing or the armour are marked in pairs by different colouring of the materials or are marked in different colours.

## Revendications

1. Dispositif de débrayage pour un embrayage (6) utilisé dans des véhicules, ledit dispositif comprenant un boîtier (3) de forme cylindrique creuse qui est axialement déplaçable et entoure, à l'écart, un arbre menant, ledit boîtier (3) étant supporté sur un levier d'actionnement (2) par l'intermédiaire d'une surface de support (8a, 8b ; 18a, 18b) en étant fixé par concordance de forme et avec du jeu sur le levier d'actionnement (2), et ledit boîtier (3) comprenant, sur l'extrémité opposée au levier d'actionnement (2), une butée de débrayage (4), dans lequel dispositif
- le levier d'actionnement (2) forme une réception (11) dans laquelle le boîtier (3) peut être fixé dans, au moins, deux positions différentes de montage, de sorte qu'il se produit un encombrement différent en hauteur du dispositif de débrayage (1), c'est-à-dire, un ajustement de la hauteur « s » ,
- pour chaque position de montage, le boîtier (3) comprend deux surfaces de support (8a, 8b ; 18a, 18) agencées en paires décalées de 90°, l'une de l'autre, par l'Intermédiaire desquelles le boîtier (3) est supporté sur le levier d'actionnement (2),
- le boîtier (3) possède une surface périphérique externe (27),
- **caractérisé en ce que**, dans la région de la surface périphérique externe (27), en particulier, dans la région des surfaces de support (8a, 8b ; 18a, 18b), le boîtier (3) est configuré pour deux ouvertures de dé « sw₁ », « sw₂ » destinées à recevoir des outils.

2. Dispositif de débrayage selon la revendication 1, dans lequel le boîtier (3) comprend des surfaces de support (8a, 8b ; 18a, 18b) correspondant à chaque position de montage, et ces surfaces sont configurées sous la forme de saillies (9a, 9b ; 19a, 19b) qui s'étendent en direction axiale et coopèrent avec le levier d'actionnement (2).

3. Dispositif de débrayage selon la revendication 1, dans lequel le boîtier (3) comprend sur les surfaces de support (8a, 8b ; 18a, 18) des saillies (9a, 9b ; 19a, 19b) de forme convexe ou bombée qui forment des zones de contact (7) avec une contre-surface (10) du levier d'actionnement (2).

4. Dispositif de débrayage selon la revendication 2, dans lequel les saillies (9a, 9b ; 19a, 19b) des surfaces de support (8a, 8b; 18a, 18b) ont une configuration plate ou droite.

5. Dispositif de débrayage selon la revendication 1, qui comprend un boîtier (3) fabriqué en matière synthétique avec des surfaces de support (8a, 8b ; 18a, 18b) formées d'un seul tenant sur celui-ci.

6. Dispositif de débrayage selon la revendication 1, dans lequel toutes les surfaces de support (8a, 8b; 18a, 18b) sont configurées sous la forme d'une armature (26) qui est une pièce séparée associée au boîtier (3).

7. Dispositif de débrayage selon l'une des revendications 2 à 4, dans lequel un revêtement anti-usure et/ou anti-frottement est prévu, au moins, sur le côtés frontaux des saillies (9a, 9b ; 19a, 19b) ou sur la surface de support (8a, 8b ; 18a, 18b).

8. Dispositif de débrayage selon la revendication 1, dans lequel deux aplatissements (12a, 12b) parallèles, l'un à l'autre, sur la surface périphérique externe (27) s'engagent dans la position de montage par concordance de forme dans une réception (11) du levier d'actionnement (2) correspondant à un contour extérieur de la surface périphérique externe (27).

9. Dispositif de débrayage selon la revendication 1, qui, pour éviter un défaut de montage, comprend pour chaque position de montage du boîtier (3), une indication visuelle (16).

10. Dispositif de débrayage selon la revendication 9, qui comprend, en tant qu'indication visuelle (16), un code à barres.

11. Dispositif de débrayage selon la revendication 10, muni d'une indication visuelle (16) qui est visible, après l'assemblage, à l'état de montage du boîtier (3).

12. Dispositif de débrayage selon la revendication 9, qui comprend, en tant qu'indication visuelle (16), des marques en creux ou en relief, telles que, par exemple, une nervure ou des lettres.

13. Dispositif de débrayage selon la revendication 12, dans lequel une nervure d'accord (25) intégrale incluant un point destiné à la rupture assure un montage du boîtier (3) dans la position voulue.

14. Dispositif de débrayage selon la revendication 1, comprenant une liaison à encliquetage (13) entre le boîtier (3) et le levier d'actionnement (2).

15. Dispositif de débrayage selon la revendication 14, dont la liaison à encliquetage (13) comprend en tant que saillie de fixation (14), des estampages ou des encoches qui s'engagent par concordance de forme dans un évidement correspondant ou qui s'encliquettent sur une paroi (15) du levier d'actionnement (2).

16. Dispositif de débrayage selon la revendication 1, comprenant un levier d'actionnement (2) en tôle d'acier qui est fabriqué sans enlèvement de copeaux par une méthode d'emboutissage.

17. Dispositif de débrayage selon la revendication 1, dans lequel tous les composants du dispositif (1) de débrayage, le boîtier (3), le levier d'actionnement (2) ainsi que la butée (4) de débrayage, sont assemblés de manière inséparable pour former un ensemble unitaire.

18. Dispositif de débrayage selon la revendication 6, dans lequel, au moins une paire de surfaces de support est associée sous la forme d'un composant séparé au boîtier (3) en étant relié à celui-ci par concordance de forme ou par jonction de matières.

19. Dispositif de débrayage selon la revendication 6, dans lequel l'armature (26) est fabriquée sous la forme d'une couche à composants multiples, directement pendant la fabrication du boîtier, par projection à composants multiples et est relié au boîtier de base par concordance de forme et / ou par jonction de matières.

20. Dispositif de débrayage selon l'une des revendications précédentes, dans lequel les endroits différents de contact du boîtier ou de l'armature sont marqués en paires par coloration différente des matériaux, ou sont marqués en des couleurs différentes.
